# EUROPEAN PATENT SPECIFICATION

(11) **EP 3 428 746 B1**
(45) Date of publication and mention of the grant of the patent: **02.06.2021**
(21) Application number: 17181431.2
(22) Date of filing: 14.07.2017
(51) Int. Cl.: G05B 13/02, G05B 19/404, G06N 3/04, B25J 9/16

(54) **A METHOD AND APPARATUS FOR PROVIDING AN ADAPTIVE SELF-LEARNING CONTROL PROGRAM FOR DEPLOYMENT ON A TARGET FIELD DEVICE**
VERFAHREN UND VORRICHTUNG ZUR BEREITSTELLUNG EINES ADAPTIVEN SELBSTLERNENDEN STEUERUNGSPROGRAMMS ZUR ANWENDUNG AUF EINER ZIEL-FELDVORRICHTUNG
PROCÉDÉ ET APPAREIL PERMETTANT DE FOURNIR UN PROGRAMME DE COMMANDE D'AUTO-APPRENTISSAGE ADAPTATIF POUR UN DÉPLOIEMENT SUR UN DISPOSITIF DE TERRAIN CIBLE

(43) Date of publication of application: 16.01.2019
(73) Proprietor: Siemens Aktiengesellschaft, 80333 München (DE)
(72) Inventor: Thon, Ingo, 81541 Muenchen (DE); Soler Garrido, Josep, 81547 München (DE)

(56) References cited:
- EP-A1- 0 680 630
- US-A1- 2008 071 394
- US-A1- 2013 325 774
- US-A1- 2015 039 545
- US-A1- 2017 132 513
- MART\'IN ABADI ET AL: "TensorFlow: Large-Scale Machine Learning on Heterogeneous Distributed Systems", ARXIV.ORG, CORNELL UNIVERSITY LIBRARY, 201 OLIN LIBRARY CORNELL UNIVERSITY ITHACA, NY 14853, 14 March 2016 (2016-03-14), XP080689634,

## Description

The invention relates to a method and apparatus for providing an adaptive self-learning control program for deployment on a target field device, in particular on an industrial controller.

Industrial controllers such as PLCs used in an industrial automation system need to be able to perceive their environment or reason about their performance and optimize their control parameters. To predict a potential consequence of a control intervention by the controller a model can be used which is able to predict the effect of a control and/or to calculate necessary control steps based on an expected target value. These models are typically configured by means of parameters which need to be adjusted to real system properties. In conventional systems setting up these relationships is cumbersome and labour-intensive. For instance, the exact effect of a motor control needs to be exactly adjusted where the control can exactly control the angle of a stepper motor of a robot. However, the change of the end effectors depends on the kinematics of the robot which are also influenced by physical properties of the joints of the respective robot. Due to manufacturing tolerances, these physical properties can vary between different robots. Besides manufacturing tolerances, also a wear-out of other components can lead to a de-calibration of the technical system. For example, the position of a robot joint of the robot can drift over time due to a slack in the robot joints. Calibration and recalibration is often performed in a manual process where a human operator is adjusting the function parameters.

US 2017/132513 A1 discloses systems and methods for training a neural network represented as a computational graph. An example method begins with obtaining data representing a computational graph. The computational graph is then augmented to generate a training computational graph for training the neural network using a machine learning training algorithm that includes computing a gradient of an objective function with respect to each of the parameters of the neural network. A system performs operations to generate the particular output by partitioning the operations represented by the computational graph across multiple devices. The devices perform the operations and, if applicable, return a respective output or indication to the system, which can return the requested output or indication to the client.

US 2008/071394 A1 discloses constrained non-linear approximator for empirical process control. A first stage is the specification of the general shape of the gain trajectory or base non-linear function which is specified graphically, algebraically or generically and is used as the basis for transfer functions used in the second stage. A second stage is the interconnection of the transfer functions to allow non-linear approximation. A final stage is the constrained optimization of the model coefficients such that the general shape of the input/output mappings (and their corresponding derivatives) are conserved.

EP 0 680 630 A1 discloses selecting any parameters to be input into a neurocontroller to generate output where that neurocontroller is trained on those parameters. Training systems for accomplishing this, as well as various closed-loop applications, are taught.

US 2015/039545 A1 discloses an example method for controlling an AC electrical machine including providing a PWM converter operably connected between an electrical power source and the AC electrical machine and providing a neural network vector control system operably connected to the PWM converter. A control system includes a current-loop neural network configured to receive a plurality of inputs. The current-loop neural network is configured to optimize the compensating dq-control voltage.

US 2013/325774 A1 discloses generalized learning rules. A framework is used to enable an adaptive signal processing system to flexibly combine different learning rules (supervised, unsupervised, reinforcement learning) with different methods (online or batch learning). The generalized learning framework employs non-associative transform of time-averaged performance function as the learning measure, thereby enabling modular architecture where learning tasks are separated from control tasks, so that changes in one of the modules do not necessitate changes within the other.

Accordingly, it is an object of the present invention to provide a method and apparatus for providing an adaptive self-learning control program for deployment of a target field device where the setup can be performed faster and provides an even more accurate control.

This object is achieved according to a first aspect of the present invention by a method for deploying and executing self-optimizing functions on a target field device comprising the features of claim 1.

The invention provides according to the first aspect a method for deploying and executing self-optimizing functions on a target field device such as a controller, wherein the method comprises the steps of:
providing a set of functions having at least one tuneable parameter,
deriving automatically from the provided set of functions an additional set of functions used to optimize the tuneable parameters of the original set of functions,
converting both sets of functions into a machine executable code specific to the respective target field device and deploying and executing the converted machine executable code on said target field device.

Furthermore, iteratively optimizing the tuneable parameters, θ, of the provided set of functions, f, with a learning rate, η, by weighting partial gradients of the parameters, θ, with the learning rate, η, and then adding the result to the respective parameters, wherein learning is performed in real time. The provided set of functions, f, forms a system model adapted to learn characteristics of a technical system; On the basis of the system model formed by the provided input set of functions, f, a computation graph is automatically generated by a graph generation software component. The generated computation graph describes operations of the functions in a sequential order to be performed by the target field device.

In a possible embodiment of the method according to the first aspect of the present invention, the provided set of functions forms a system model adapted to learn characteristics of a technical system.

In a still further possible embodiment of the method according to the first aspect of the present invention, the system model is a machine learning model which comprises a neural network.

In a possible embodiment, the machine learning model comprises a deep learning neural network.

In a still further possible embodiment, the system model comprises a decision tree.

In a further possible embodiment, the system model comprises a logistic regression model.

In a still further possible embodiment, the system model comprises an equation system.

In a further possible embodiment of the method according to the first aspect of the present invention, the additional set of functions comprises partial gradients with respect to the tuneable parameters of the provided original set of functions derived automatically from said original set of functions.

In a further possible embodiment of the method according to the first aspect of the present invention, the additional set of functions represent stochastic gradient descents, mini-batch gradient descents and/or full gradient descents.

In a still further possible embodiment of the method according to the first aspect of the present invention, the generated computation graph comprises
a forward computation subgraph representing the original set of functions and
a backward computation subgraph representing the derived additional set of functions used to train the tuneable parameters of the original set of functions.

In a still further possible embodiment of the method according to the first aspect of the present invention, the generated computation graph is exported to a model transformation module which converts automatically the received computation graph into a binary machine executable code specific for said target field device and the binary machine executable code is deployed automatically on said target field device.

In a still further possible embodiment of the method according to the first aspect of the present invention, the generated computation graph received by the model transformation module is parsed to provide an intermediate code in a low level programming language which is compiled to generate the binary machine executable code specific to said target field device which is deployed on said target field device.

In a still further possible embodiment of the method according to the first aspect of the present invention, the forward computation subgraph forming part of the generated computation graph is parsed to provide a first intermediate code compiled to generate a first binary machine executable software component forming a model execution software component deployed on said target field device and
wherein the backward computation subgraph forming part of the generated computation graph is parsed to provide a second intermediate code compiled to generate a second binary machine executable software component forming an online model training software component deployed on said target field device.

In a still further possible embodiment of the method according to the first aspect of the present invention, the model execution software component deployed on said target field device is executed in a real time context.

In a further possible embodiment of the method according to the first aspect of the present invention, the deployed online model training software component deployed on said target field device is executed either in a non-real time context or in a real time context.

In a still further possible embodiment of the method according to the first aspect of the present invention, the deployed online model training software component updates iteratively the deployed model execution software component on the basis of a data stream received from the technical system using partial gradients to optimize the parameters of the provided set of functions.

In a still further possible embodiment of the method according to the first aspect of the present invention, the deployed model execution software component applies computations prescribed by its binary machine executable code to an input data stream received from the technical system for calculating estimated target values.

In a still further possible embodiment of the method according to the first aspect of the present invention, the input data stream comprises a sensor data stream received from sensors of the technical system.

In a still further possible embodiment of the method according to the first aspect of the present invention, the machine executable code is deployed and executed on a target field device formed by a controller, in particular a PLC controller or a CNC controller.

In a still further possible embodiment of the method according to the first aspect of the present invention, the tuneable parameters of the provided set of functions are optimized iteratively with a learning rate.

In a further possible embodiment of the method according to the first aspect of the present invention, the tuneable parameters of the provided set of functions are optimized iteratively by weighting partial gradients of the parameters with the learning rate and then adding the result to the respective parameters.

In a further possible embodiment of the method according to the first aspect of the present invention, the converted machine executable code is deployed in a memory of the target field device and executed by a processor of the target field device.

In a still further possible embodiment of the method according to the first aspect of the present invention, an error between observed target values and estimated target values calculated by the model execution software component deployed on said target field device is measured by comparing the observed target values and the estimated target values by means of a predetermined loss function.

The invention further provides according to a second aspect a deployment system for deployment of an adaptive self-learning program on a target field device comprising the features of claim 16.

The invention provides according to the second aspect a deployment system for deployment of an adaptive self-learning control program on a target field device, in particular on a controller, wherein said system comprises:
an input user interface to input a set of functions having at least one tuneable parameter forming a system model representing characteristics of a technical system,
a processing unit configured to extend the system model by deriving automatically from the input set of functions an additional set of functions used to optimize the tuneable parameters of the model and to convert both sets of functions into a machine executable code specific to the respective target field device and
an output interface used to deploy the machine executable code in a memory of said target field device for execution by a processor of the target field device.

The deployment system is further configured, that the provided set of functions, f, forms a system model adapted to learn characteristics of a technical system, on the basis of the system model formed by the provided input set of functions, f, a computation graph is automatically generated by a graph generation software component, and the generated computation graph (CG) describes operations of the functions in a sequential order to be performed by the target field device.

In the following, possible embodiments of the different aspects of the present invention are described in more detail with reference to the enclosed figures.
- Fig. 1: shows a flowchart of a possible exemplary embodiment for deploying and executing self-optimizing functions on a target field device according to a first aspect of the present invention;
- Fig. 2: shows a block diagram for illustrating an architecture of a system used for performing the method illustrated in Fig. 1;
- Fig. 3: shows a block diagram for illustrating a possible exemplary embodiment of a code generation apparatus for providing an adaptive self-learning control program for deployment on a target field device according to a further aspect of the present invention;
- Fig. 4: shows schematically an exemplary use case where the method and apparatus according to the present invention can be implemented;
- Fig. 5: shows a diagram for illustrating the generation of a computation graph CG for the use case shown in Fig. 4.

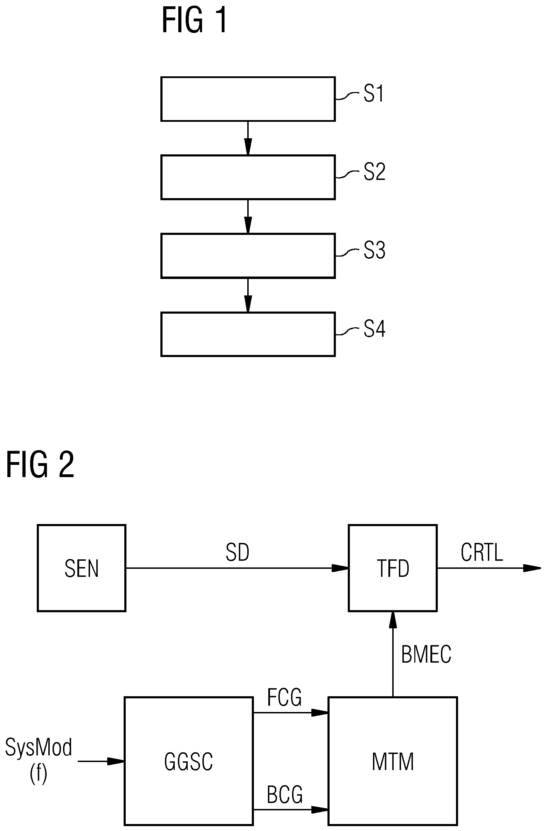

The method for deploying and executing self-optimizing functions on a target field device according to an aspect of the present invention can comprise in a possible exemplary embodiment several main steps as illustrated in Fig. 1.

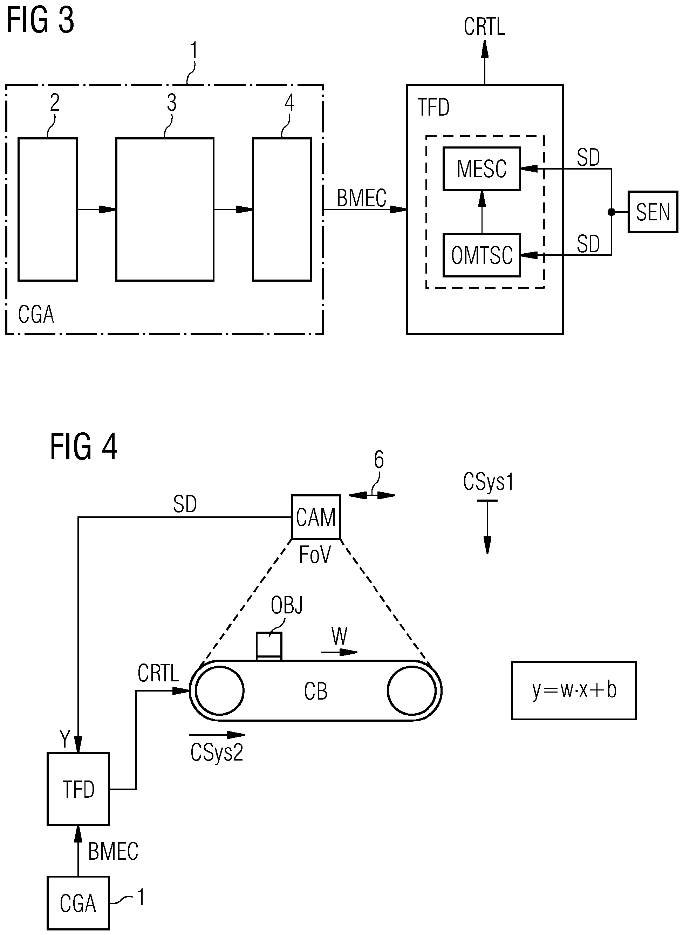

In the illustrated exemplary embodiment, in a first step S1, a set of functions f having at least one tuneable parameter θ is provided. The provided set of functions f can form a system model adapted to learn characteristics of a technical system such as the conveyor belt system with an observation camera as illustrated in Fig. 4.

In a further step S2, an additional set of functions is automatically derived from the provided original set of functions wherein the additional set of functions is used to optimize the tuneable parameters 8 of the original set of functions f forming the system model.

In a further step S3, both sets of functions, i.e. the original set of functions f and the additional derived set of functions are converted automatically into a machine executable code specific to the respective target field device TFD. The target field device TFD can be for instance a controller adapted to control a process within an automation system.

In a further step S4, the converted machine executable code is deployed on said target field device and then executed. In a possible embodiment, the converted machine executable code is deployed in a local memory of the target field device TFD and then executed by a processor of the respective target field device TFD.

The system model represented by the set of functions f can comprise in a possible embodiment a machine learning model which comprises a neural network. In a possible embodiment, the neural network is a deep learning neural network. In a possible embodiment, the neural network is a convolutional neural network CNN or a recurrent neural network RNN. In a still further possible embodiment, the system model can comprise a decision tree. In a further alternative embodiment, the system model represented by the set of functions can comprise a logistic regression model. In a still further possible embodiment, the system model of the technical system can comprise an equation system, in particular a linear equation system. The set of functions forming the system model comprises at least one tuneable parameter and can be input in a possible embodiment by means of an input interface.

The additional set of functions derived from the original set of functions can comprise in a possible embodiment partial gradients with respect to the tuneable parameters 8 of the original set of functions wherein the partial gradients are derived automatically from the original set of functions. The additional set of functions represents the gradient, which in turn is utilized in stochastic gradient descents, mini-batch gradient descents or full gradient descents algorithms.

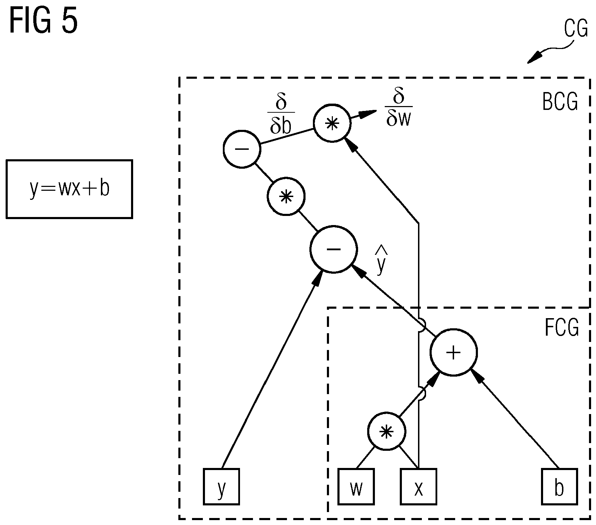

In a possible embodiment of the method according to the first aspect of the present invention as illustrated in the flowchart of Fig. 1, on the basis of the system model formed by the provided input set of functions, a computation graph CG can be automatically generated by a graph generation software component. The generated computation graph CG can comprise two subgraphs FCG, BCG as also illustrated in the example of Fig. 5.

In a possible embodiment, the generated computation graph CG comprises a forward computation subgraph FCG and a backward computation subgraph BCG. The forward computation subgraph FCG represents the original set of functions f. The backward computation subgraph BCG represents the derived additional set of functions used to train the tuneable parameters θ of the original set of functions. The generated computation graph CG can describe operations of the functions in a sequential order to be performed by the target field device TFD or controller. The generation of the computation graph CG comprising the forward computation subgraph FCG and the backward computation subgraph BCG is performed in step S3 of the method illustrated in Fig. 1. The generated computation graph CG is further exported in step S3 in a possible embodiment to a model transformation module MTM which converts automatically the received computation graph CG into a binary machine executable code BMEC specific for the respective target field device TFD. The binary machine executable code BMEC is then deployed in a memory of the target field device TFD.

In a possible embodiment, the generated computation graph CG received by the model transformation module MTM is parsed to provide an intermediate code in a low-level programming language such as C or Assembler. The intermediate code is then compiled to generate the binary machine executable code BMEC specific to the target field device TFD and deployed on the target field device TFD. In a possible embodiment, the forward computation subgraph FCG forming part of the generated computation graph CG is parsed to provide a first intermediate code which is then compiled to generate a first binary machine executable software component forming a model execution software component MESC, deployed in a memory of said target field device TFD. Further, the backward computation subgraph BCG forming also part of the generated computation graph CG is also parsed to provide a second intermediate code which is then compiled to generate a second binary machine executable software component forming an online model training software component OMTSC deployed on said target field device TFD in step S4. The model execution software component MESC deployed on the target field device TFD in step S4 is executed in a real-time context. On the other hand, the deployed online model training software component OMTSC deployed on the target field device TFD can be either executed in a non-real time context or in a real-time context. As also illustrated in Fig. 3, the deployed online model training software component OMTSC can update iteratively the deployed model execution software component MESC on the basis of a data stream which can be received from a sensor of the technical system using partial gradients to optimize the parameters θ of the provided set of functions f forming a system model adapted to learn characteristics of the respective technical system. The update of the implemented model execution software component MESC by the online model training software component OMTSC can be performed in a possible embodiment during operation of the respective technical system. The deployed model execution software component MESC applies computations prescribed in its binary machine executable code BMEC to an input data stream received from sensors of the technical system for calculating estimated target values y. The machine executable code deployed in a possible embodiment in a local memory of the target field device TFD is then executed by a processor or execution engine of the target field device. The machine executable code comprises the model execution software component MESC representing the forward computation subgraph FCG and the online model training software component OMTSC representing the backward computation subgraph BCG. The backward computation subgraph BCG represents the derived additional set of functions which can be used to train the tuneable parameters of the original set of functions f represented by the forward computation subgraph FCG. The model execution software component MESC deployed on the target field device is executed in a real-time context. In contrast, the deployed online model training software component OMTSC is executed in a first embodiment in a non-real time context and in a second embodiment in a real-time context.

The model transformation module MTM converts the computation graph CG from a high-level description format to a format suitable to be executed in a target field device TFD. The deployed model execution software component applies the computations prescribed by the learned model to a live stream of data which can come for example from smart sensors or from other sources internal to the controller or real-time device. The deployed online model training software component OMTSC can use stochastic gradient descents. The online model training software component OMTSC takes the model and gradient and can iteratively update the weights of the model.

In a possible embodiment, both software components, i.e. the online model training software component OMTSC and the model execution software component MESC are deployed directly in a real-time system context of the respective system. In an alternative embodiment, the online model training software component OMTSC is deployed in a real-time context of the target field device, whereas the model execution software component MESC is separately deployed, i.e. in a non-real-time context of the same device, or on a separate device connected by a data interface. The online model training software component OMTSC can periodically update coefficients and possibly also a topology of the computation graph CG that are used by the execution component, i.e. the model execution software component MESC which runs in the real-time context.

The trained analytical model can be deployed on any kind of industrial target field devices TFD, in particular to any kind of controller used in an industrial system. In a possible embodiment, the high-level serialized representation of the computation graph CG and associated parameters are converted into a set of source code files which can be compiled into a device-specific program and deployed into a memory of the target field device TFD. With the present invention, training and learning of the model using the online model training software component OMTSC is tightly coupled with the execution of the deployed model execution software component MESC.

In a first variant of the method according to the first aspect of the present invention, the online model training software component OMTSC is separately deployed from the model execution software component MESC, e.g. the deployed online model training software component OMTSC is deployed in this first variant in a non-real time context. In this embodiment, online learning takes place on the device logically but in a non-real time context. Physically, the non-real time context can be a separate physical device connected via a data interface. This variant provides a closed loop continuous feedback mechanism to perform model updates in a non-real time context and feeds the results back to the real-time context of the target field device TFD, e.g. by updating model parameters in a memory of the target field device. In another variant, both deployed software components, i.e. the deployed online model training software component OMTSC as well as the deployed model execution software component MESC are executed in a real-time context. In this second variant, model execution takes place on the target field device TFD but also the online learning takes place on the device logically in the same real-time context. The target field device TFD can be formed by a controller, e.g. by a SIMATIC S7 controller or another PLC controller. In a possible embodiment, the tuneable parameters of the provided set of functions f can be optimized iteratively with a learning rate η. The tuneable parameters of the provided set of functions can be optimized iteratively by weighting partial gradients of the parameters 8 with the learning rate η and then adding the result to the respective parameters.

In a possible embodiment, an error e between observed target values y and estimated target values y calculated by the model execution software component MESC deployed in a memory of the target field device TFD is measured by comparing the observed target values y and the estimated target values y by means of a predetermined loss function.

Fig. 2 shows a block diagram for further illustrating the method according to the first aspect of the present invention. A system model SysMod is provided adapted to learn characteristics of a technical system, e.g. an automation system. The system model can be formed by a set of functions f. The system model can be parameterized. The system model comprises tuneable parameters θ. The provided set of functions having at least one tuneable parameter 8 can be applied in the illustrated embodiment of Fig. 2 to a graph generation software component GGCS which generates automatically on the basis of the received system model SysMod formed by the set of functions f a computation graph CG. This computation graph CG comprises a forward computation subgraph FCG and a backward computation subgraph BCG. An example of such a computation graph CG is illustrated in Fig. 5 for an exemplary simple system represented by a single function f: *y* = *w · x* + *b.* The forward computation subgraph FCG represents the original set of functions which comprises in this simple example only one function. The backward computation subgraph BCG represents the additional set of functions used to train the tuneable parameters 8 of the original set of functions f. The generated computation graph CG comprising the two subgraphs FCG, BCG is applied to a model transformation module MTM which converts automatically the received computation graph CG into a binary machine executable code BMEC specific for the target field device TFD. The binary machine executable code BMEC is deployed and stored in a local memory of the target field device TFD.

In a possible embodiment, the computation graph CG received by the model transformation module MTM is parsed to provide an intermediate code in a low-level programming language which is then processed to generate the binary machine executable code BMEC specific to the target field device TFD. As illustrated in Fig. 2, the target field device TFD can receive a sensor data stream from sensors SEN of the technical system to generate control signals CRTL.

Fig. 3 shows a block diagram of a possible exemplary embodiment of a program configuration and deployment system 1 according to a further aspect of the present invention. The program configuration and deployment system 1 gives a user the possibility to define an adaptive self-learning control program and deploy it on a target field device TFD as shown in Fig. 3. The program configuration and deployment system 1 comprises in the illustrated embodiment an input interface 2, a processing unit 3 and an output interface 4. The input interface 2 is adapted to input a set of functions f having at least one tuneable parameter θ forming a system model SysMod representing characteristics of a technical system. This is for example a software program running on the program configuration and deployment system 1, which has a user interface (for example graphical or text-based) which allows a user to provide SysMod as an input.

The processing unit 3 of the deployment system 1 is configured to derive automatically from the input set of functions f an additional set of functions used to optimize the tuneable parameters 8 of the model and to convert both sets of functions into a machine executable code specific to the respective target field device TFD. This machine executable code is in a preferred embodiment a binary machine executable code BMEC specific to the target field device TFD. The binary machine executable code BMEC comprises two software components, i.e. the model execution software component MESC and the online model training software component OMTSC as illustrated in Fig. 3. Both software components OMTSC, MESC can be deployed and stored in a local memory of the target field device TFD as shown in Fig. 3. The target field device TFD comprises in a preferred embodiment a non-illustrated processor for executing the machine executable code stored in the local memory of the target field device TFD. Both deployed software components, i.e. the model execution software component MESC as well as the deployed online model training software component OMTSC receive a data stream from a data source such as the sensors SEN of the technical system as shown in Fig. 3. The sensors can comprise smart sensors of the technical system. The sensor data SD is received from the sensors through a data interface of the target field device TFD.

The processing unit 3 of the deployment system 1 can comprise the graph generation software component GGCS and the model transformation module MTM as illustrated in the block diagram of Fig. 2.

Fig. 4 shows schematically a possible use case where a method and system 1 according to the present invention can be used for providing an adaptive self-learning control program. In the illustrated example, a conveyor belt CB is moving an object OB put on the conveyor belt CB with a velocity v in x direction as shown in Fig. 4. The working space of the conveyor belt CB is observed by a camera. A robot arm used for grabbing the object knows the location of its end effector in a three-dimensional space. This position can be calculated by means of its forward kinematics, i.e. a set of equations, from its joint positions. However, these coordinates are neither absolute nor necessarily scaled correctly. The camera CAM can by means of computer vision tell exactly where in the camera image of the camera CAM the target object is located. However, the robot itself has a different coordinate system for its end effector and a relationship between the two coordinate systems needs to be established. In addition, the control can only set the target values, i.e. axis angles for motors in the joints of the robot arm. However, the influence on the end effectors of the robot arm needs to be established as well. With the method according to the present invention, it is possible that the robot learns automatically which axis angles corresponds to which camera coordinates and therefore how to control its motor to grab the target object placed on the conveyor belt CB.

The technical system is described in this simple example for this use case by a single function f: *y* = *w · x* + *b,* wherein b is a bias or offset of the camera CAM, x are input values and w is the conveyor belt velocity relative to the camera image and y are observed values, wherein *w* = *c · v* with c depending on a focal length and angle of the camera CAM.

The tuneable parameters 8 of this technical system are in the given example w, b.

Generally, *ŷ* = *f* (*x*; *θ*), wherein x is the input, and θ represents the parameters, i.e. the property to be estimated and y is the estimated target value. In the exemplary use case, x is the end effector position, y is the vector of the pixel coordinates perceived. The weights of the model are optimal if *ŷ* = *y.* To find the optimal parameters θ (i.e. bias b and velocity w), an optimization problem can be formulated of a loss function *L* (*y, ŷ* ; *θ*) = *sum* (*yᵢ* - *f*(*xᵢ ,θ*))² (*fix quadratic loss*) and the parameters 8 are optimized sequentially by calculating the gradient at θᵢ and by doing a gradient step towards θᵢ₊₁. Ideally, the gradient descent converges towards the minima of the loss function L. In a possible embodiment, stochastic gradient descents can be used. This stochastic gradient descent is approximating the gradient on a single sample or on a mini-batch instead of calculating the true gradient of a full training set. It then takes a small step in the direction of the gradient. A possible implementation of the stochastic gradient descent is as follows:
1.) Choose an initial vector of parameters w and learning rate η after function has been deployed.
2.) Initialize sum of partial gradient to be zero
3.) Whenever a new pair of input value and target value is available
   a. apply the CG to the pair to derive the partial gradient
   b. add the partial gradient of the current pair to the sum of gradients
   c. If the batch size is reached
      i. subtract the sum of partial gradients multiplied by learning rate divided by batch size from the current weights
      ii. Set the sum of partial gradients to zero

Using stochastic gradient descent has the advantage that storing the training samples is not needed and in addition, due to the fixed size mini-batches, real-time guarantees can be given. In the illustrated use case of Fig. 4, a camera CAM forms a smart sensor SEN of the technical system. The smart sensor or camera can perceive the environment. The sensor is smart in the sense that it is able to extract meaning information from raw sensor streams. In case of a video image, this can mean that the sensor SEN is able to extract the location of the target object. Accordingly, the camera can in a possible embodiment comprise an information extraction unit. In a possible embodiment, this can be achieved by augmented reality marker technology or other computer vision technology like deep learning. In a preferred embodiment, all smart sensors used in the technical system are properly synchronized. Smart sensors form the data sources providing the source data to the target field device TFD generating control signals for the respective technical system as also illustrated in Fig. 4. The received sensor data SD form observed values y. In a possible embodiment, the calculation unit of the target field device TFD is adapted to calculate an error e between the observed target values y represented by the sensor data SD received from the smart sensors SEN and estimated target values y calculated by the model execution software component MESC deployed on the target field device TFD. The errors e can be measured by comparing the observed target values y and the estimated target values y by means of the predetermined loss function L.

There are two different phases of operation, i.e. first a setup phase and then an online learning phase.

In the setup phase, the model to be used is deployed by the system 1 on a target field device TFD, e.g. on an S7 controller. The model comprises a set of functions defining the characteristics or the behaviour of the system. The model definition is partial in the sense that not all parameters 8 need to be fully specified. In mechanical systems, for example, this definition consists of standard operations like scaling, translation and/or rotation. The partial definition of the system shall not be over-constrained. For example, a real system may comprise a translation not covered by the system model. Some variables or measurements can act as input values x and other act as target values y. Based on the input variables x and the parameters 8 using the model, the estimated target values y can be calculated *ŷ* = *f*(*x*; *θ*). An error e between the true value y and the predicted value *ŷ* can be measured by means of the loss function L. One example is the 3D projection with unknown camera location. There, the missing information is a translation and rotation of the camera CAM as well as intrinsic camera parameters of the camera CAM. Another example is the kinematic of a robot arm where the relationship of a motor position to a position of a joint is partially defined, e.g. that a joint introduces a rotation of an end effector around the joint. The model can also contain other functions which predict values based on the weights learned by the systems. In a simple case, in the 3D projection, the expected position of the end effector can be based on joint positions. Or in the other example, utilizing the parameters in the inverse kinematic of the robot arm can be utilized to calculate the motor positions to reach a certain position with the end effector. The functions or formula of the system model can be translated into the computation graph CG which forms a model description. The computation graph CG forms a description of computational steps to apply the model to the measured data. In addition, the computation graph CG is augmented with partial derivatives with respect to each of the variables to be optimized by the learning process. The model is translated into a binary library which can be then executed as a target field device TFD. The model can typically consist of two subgraphs FCG, BCG which are related to one another. The forward computation subgraph FCG defines operations used for inference (model execution/scoring), and the other backward computation subgraph BCG defines the computations used for training, i.e. for updating the model parameters θ. Both subgraphs FCG, BCG can be parsed in order to convert them into a representation suitable for industrial real-time target field devices TFD. This conversion involves converting the computation graphs FCG, BCG for example into sets of C++ code files or any other low level language. This code can in turn be compiled in the model binary by means of a field device compiler. This model binary together with the generic learning code optionally with any other binaries required by the target device, e.g. a generic program to connect the self optimizing program to specific signals in the target device, can then be deployed in a memory of the target field device TFD. This step can be done separately for the forward (execution) and backward (training) subgraphs.

The target field device TFD can have different execution contexts, e.g. a real-time context and a non-real time context. In a possible deployment alternative, only the model execution software component MESC (representing the forward computation graph FCG) is deployed to the real-time context to work on a live stream of sensor data. The learning graph, i.e. the backward computation subgraph BCG may have more relaxed latency requirements. For example, the model can be updated or trained more slowly than the data flow and does not need to be updated on reception of every data sample. This makes it possible to deploy the corresponding training subgraph, i.e. the backward computation graph BCG on a non-real time context. The real-time context is typically more restrictive and the transformation helps the resulting model to meet the required constraints and qualities for real-time execution. The non-real time context can be less restrictive enabling a more flexible model training component to be deployed, which can work on a higher level representation of the model without requiring a parsing step or conversion to source code. Accordingly, there are two different possible alternative embodiments. In a first embodiment, the online learning software component is deployed in a non-real time context and therefore the parsing and/or conversion into a standalone binary is optional for this software component. The alternative embodiment, where both execution and online learning is performed on the real-time context, requires both to be parsed into efficient binaries.

After the setup phase has been concluded, the online learning phase is initiated. The online learning phase contains besides standard control flows the following steps. When the control is started up, the parameters θ which are also called weights representing the unknown information in the model definition phase can be initialized at random. When the control is running all data is processed in the target field device TFD or controller as normal. However, in addition, each measured data point required by the model deployed is also run through the following processing steps. First, all measurements, parameters and if available also target values, are injected into the binary library generated in the model definition phase. The library then calculates based on the weights and parameters the expected target values, but also the parameters and the partial derivatives of all parameters in respect to the values. The partial derivatives of the parameters, weighted by the learning rate, are then added to parameters to derive a new parameterisation. In addition, the additional functions are evaluated.

Fig. 5 illustrates schematically a computation graph CG for a function f illustrating the use case shown in Fig. 4. The function is: *y* = *wx* + *b* .

The derivative of the first unknown parameter b is as follows: - (2 · (*y* - ((*w · x*) + *b*)).

The derivative of the second unknown parameter w is as follows: *x ·* (-(2(*y*-((*w·x*) +*b*).

Accordingly, the derivative of the second parameter w can use the result of the first parameter b as also illustrated in the computation graph CG shown in Fig. 5. The computation graph CG comprises a forward computation subgraph FCG and a backward computation subgraph BCG having also the observed result as input y. The estimated value *ŷ* = *wx* + *b* calculated according to the forward computation graph FCG is subtracted from the observed value y to calculate the derivatives of the two unknown parameters b, w of the technical system.

The method and deployment system according to the present invention can be used for any kind of industrial system, in particular automation systems or robotic systems. The method allows for a self-adaption to change the process parameters θ. Further, it allows for a partial setup system as it can itself adapt to changes between preconfigured and real process parameters. The learning can be performed in a possible embodiment in real time. The method can be applied whenever an industrial automation is used to control some kind of effectors or actuators such as motors, valves for fluids, etc. where the consequences (e.g. position, speed, flow, temperature) can be measured and there is an expected target for the measured consequences. Accordingly, the method according to the present invention can be used for both a feedforward control system or a regulation or a feedback control system. In a feedforward control system, the target value can be hit more accurately. In regulation systems, the system becomes more stable as the prediction of the consequence of a control intervention can be more accurately predicted by a machine. To predict the consequence of a control intervention, the model can predict the effort of a control and/or calculate necessary control steps based on the expected target value. These models can be typically configured by means of parameters θ which need to be adjusted to the real system properties of the technical system.

The method according to the present invention provides a learning in an industrial control system where the learning can be optionally performed in real time. A model generation learning is based on a predefined model of the technical system. The method and deployment system according to the present invention result in a more accurate and precise control since the controlled technical system can be adapted automatically to its environment. Further, maintenance costs for the technical system are reduced as no manual calibration needs to be triggered. Therefore, maintenance costs but also non-productive periods of the technical system can be significantly reduced. This can be achieved by the online learning software component OMTSC which ensures that the parameters 8 describing the technical system to be controlled are adjusted more accurately. Therefore, the method allows to adjust the parameters of the technical system more precisely.

## Claims

1. A method for deploying and executing self-optimizing functions on a target field device (TFD),
the method comprising the steps of:
providing (S1) a set of functions, f, having at least one tuneable parameter, θ;
and
iteratively optimizing the tuneable parameters, θ, of the provided set of functions, f, with a learning rate, η, by weighting partial gradients of the parameters, θ, with the learning rate, η, and then adding the result to the respective parameters, wherein learning is performed in real time;
**characterised in**
**that** the provided set of functions, f, forms a system model (SysMod) adapted to learn characteristics of a technical system;
**that** the system model (SysMod) is extended by automatically deriving from the set of functions, f, an additional set of functions used to optimize the tunable parameters, θ, of the system model (SysMod);
**that** on the basis of the system model (SysMod) formed by the provided set of functions, f, a computation graph (CG) is automatically generated by a graph generation software component (GGSC); and
**that** the generated computation graph (CG) is applied to a model transformation module (MTM) to generate a binary machine execution code specific to the target field device (TFD), the machine executable code being deployed and executed on said target field device (TFD).

2. The method according to claim 1 wherein the system model (SysMod) comprises a machine learning, ML, model which comprises a neural network, in particular a deep learning neural network, or comprises a decision tree, a logistic regression model, or an equation system.

3. The method according to any of the preceding claims 1 to 2 wherein the additional set of functions comprises partial gradients with respect to the tuneable parameters, θ, of the provided original set of functions, f, derived automatically from said original set of functions, f.

4. The method according to claim 3 wherein the additional set of functions represent stochastic gradient descents, mini-batch gradient descents and/or full gradient descents.

5. The method according to one of the previous claims wherein the generated computation graph (CG) comprises
a forward computation subgraph (FCG) representing the original set of functions, f, and
a backward computation subgraph (BCG) representing the derived additional set of functions used to train the tuneable parameters, θ, of the original set of functions, f.

6. The method according to any of the preceding claims wherein the generated computation graph (CG) is exported to the model transformation module (MTM)

7. The method according to claim 6 wherein the generated computation graph (CG) received by the model transformation module (MTM) is parsed to provide an intermediate code in a low level programming language which is compiled to generate the binary machine executable code (BMEC) specific to said target field device (TFD) which is deployed on said target field device (TFD).

8. The method according to any of the preceding claims 5 to 7 wherein the forward computation subgraph (FCG) forming part of the generated computation graph (CG) is parsed to provide a first intermediate code compiled to generate a first binary machine executable software component forming a model execution software component (MESC) deployed on said target field device (TFD) and
wherein the backward computation subgraph (BCG) forming part of the generated computation graph (CG) is parsed to provide a second intermediate code compiled to generate a second binary machine executable software component forming an online model training software component (OMTSC) deployed on said target field device (TFD).

9. The method according to claim 8 wherein the model execution software component (MESC) deployed on said target field device (TFD) is executed in a real time context and wherein the deployed online model training software component (OMTSC) deployed on said target field device (TFD) is executed either in a non-real time context or in a real time context.

10. The method according to claim 8 or 9 wherein the deployed online model training software component (OMTSC) updates iteratively the deployed model execution software component (MESC) on the basis of a data stream received from the technical system using partial gradients to optimize the parameters, θ, of the provided set of functions, f.

11. The method according to any of the preceding claims 8 to 10 wherein the deployed model execution software component (MESC) applies computations prescribed by its binary machine executable code to an input data stream received from the technical system for calculating estimated target values, *ŷ*.

12. The method according to claim 11 wherein the input data stream comprises a sensor data stream (SD) received from sensors (SEN) of the technical system.

13. The method according to any of the preceding claims 1 to 12 wherein the machine executable code is deployed and executed on a target field device (TFD) formed by a controller.

14. The method according to any of the preceding claims 1 to 13 wherein the converted machine executable code is deployed in a memory of the target field device (TFD) and executed by a processor of the target field device (TFD).

15. The method according to any of the preceding claims 11 to 14 wherein an error between observed target values, y, and estimated target values, *ŷ*, calculated by the model execution software component (MESC) deployed on said target field device (TFD) is measured by comparing the observed target values, y, and the estimated target values, *ŷ*, by means of a predetermined loss function, L.

16. A deployment system for deployment of an adaptive self-learning control program on a target field device (TFD),
said system comprising:
(a) a user interface (2) to input a set of functions, f, having at least one tuneable parameter, θ, forming a system model (SysMod) representing characteristics of a technical system;
(b) a processing unit (3) configured to extend the system model (SysMod) by deriving automatically from the input set of functions, f, an additional set of functions used to optimize the tuneable parameters, θ, of the system model (SysMod);
(c) an output interface (4) used to deploy the machine executable code in a memory of said target field device (TFD) for execution by a processor of the target field device (TFD); and
the deployment system is configured to iteratively optimize the tuneable parameters, θ, of the provided set of functions, f, with a learning rate, η, by weighting partial gradients of the parameters, θ, with the learning rate, η, and then adding the result to the respective parameters,
wherein learning is performed in real time;
**characterised in**
**that** the deployment system is further configured so that:
the system model (SysMod) is Z adapted to learn characteristics of the technical system, on the basis of the system model (SysMod) a computation graph (CG) is automatically generated by a graph generation software component (GGSC), and
the generated computation graph (CG) is applied to a model transformation module (MTM) to generate the binary machine execution code specific to the target field device (TFD) to be deployed and executed on said target field device (TFD).

## Patentansprüche

1. Verfahren zur Bereitstellung und Ausführung selbstoptimierender Funktionen auf einer Ziel-Feldvorrichtung (target field device, TFD),
wobei das Verfahren die folgenden Schritte umfasst:
Bereitstellen (S1) eines Satzes von Funktionen, f, der mindestens einen abstimmbaren Parameter, θ, aufweist, und
iteratives Optimieren der abstimmbaren Parameter, θ, des bereitgestellten Satzes von Funktionen, f, mit einer Lernrate, η, durch Gewichten von Teilgradienten der Parameter, θ, mit der Lernrate, η, und dann Addieren des Ergebnisses zu den jeweiligen Parametern,
wobei das Lernen in Echtzeit erfolgt,
**dadurch gekennzeichnet,**
**dass** der bereitgestellte Satz von Funktionen, f, ein Systemmodell (SysMod) bildet, das dazu ausgebildet ist, Merkmale eines technischen Systems zu lernen,
**dass** das Systemmodell (SysMod) erweitert wird durch automatisches Ableiten von dem Satz von Funktionen, f, eines zusätzlichen Satzes von Funktionen, der verwendet wird, um die abstimmbaren Parameter, θ, des Systemmodells (SysMod) zu optimieren,
**dass** auf der Grundlage des durch den bereitgestellten Satz von Funktionen, f, gebildeten Systemmodells (SysMod) durch eine Grapherzeugungssoftwarekomponente (graph generation software component, GGSC) automatisch ein Berechnungsgraph (computation graph, CG) erzeugt wird, und
**dass** der erzeugte Berechnungsgraph (CG) auf ein Modelltransformationsmodul (MTM) angewendet wird, um einen für die Ziel-Feldvorrichtung (TFD) spezifischen binären Maschinenausführungscode zu erzeugen, wobei der Maschinenausführungscode auf der Ziel-Feldvorrichtung (TFD) bereitgestellt und ausgeführt wird.

2. Verfahren nach Anspruch 1, wobei das Systemmodell (SysMod) Folgendes umfasst:
ein Machine-Learning-Modell, ML-Modell, das ein neuronales Netz, insbesondere ein neuronales Deep-Learning-Netz umfasst, oder einen Entscheidungsbaum, ein logistisches Regressionsmodell oder ein Gleichungssystem umfasst.

3. Verfahren nach einem der vorhergehenden Ansprüche 1 bis 2, wobei der zusätzliche Satz von Funktionen Teilgradienten in Bezug auf die abstimmbaren Parameter, θ, des bereitgestellten ursprünglichen Satzes von Funktionen, f, der automatisch von dem ursprünglichen Satz von Funktionen abgeleitet wird, umfasst.

4. Verfahren nach Anspruch 3, wobei der zusätzliche Satz von Funktionen stochastische Gradientenabstiege, Mini-Batch-Gradientenabstiege und/oder vollständige Gradientenabstiege darstellt.

5. Verfahren nach einem der vorhergehenden Ansprüche, wobei der erzeugte Berechnungsgraph (CG) Folgendes umfasst:
einen Vorwärtsberechnungs-Teilgraphen (forward computation subgraph, FCG), der den ursprünglichen Satz von Funktionen, f, darstellt und
einen Rückwärtsberechnungs-Teilgraphen (backward computation subgraph, BCG), der den abgeleiteten zusätzlichen Satz von Funktionen darstellt, der verwendet wird, um die abstimmbaren Parameter, θ, des ursprünglichen Satzes von Funktionen, f, zu trainieren.

6. Verfahren nach einem der vorhergehenden Ansprüche, wobei der erzeugte Berechnungsgraph (CG) in das Modelltransformationsmodul (MTM) exportiert wird.

7. Verfahren nach Anspruch 6, wobei der von dem Modelltransformationsmodul (MTM) empfangene erzeugte Berechnungsgraph (CG) analysiert wird, um einen Zwischencode in einer Programmiersprache niedrigen Niveaus bereitzustellen, der kompiliert wird, um den für die Ziel-Feldvorrichtung (TFD) spezifischen binären Maschinenausführungscode (binary machine executable code, BMEC) zu erzeugen, der auf der Ziel-Feldvorrichtung (TFD) bereitgestellt wird.

8. Verfahren nach einem der vorhergehenden Ansprüche 5 bis 7, wobei der Vorwärtsberechnungs-Teilgraph (FCG), der Teil des erzeugten Berechnungsgraphen (CG) ist, analysiert wird, um einen ersten Zwischencode bereitzustellen, der kompiliert wird, um eine erste binäre maschinenausführbare Softwarekomponente zu erzeugen, die eine Modellausführungssoftwarekomponente (model execution software component, MESC) bildet, die auf der Feldvorrichtung (TFD) bereitgestellt wird, und
wobei der Rückwärtsberechnungs-Teilgraph (BCG), der Teil des erzeugten Berechnungsgraphen (CG) ist, analysiert wird, um einen zweiten Zwischencode bereitzustellen, der kompiliert wird, um eine zweite binäre maschinenausführbare Softwarekomponente zu erzeugen, die eine Online-Modelltrainingssoftwarekomponente (online model training software component, OMTSC) bildet, die auf der Feldvorrichtung (TFD) bereitgestellt wird.

9. Verfahren nach Anspruch 8, wobei die auf der Ziel-Feldvorrichtung (TFD) bereitgestellte Modellausführungssoftwarekomponente (MESC) in einem Echtzeitkontext ausgeführt wird und wobei die auf der Ziel-Feldvorrichtung (TFD) bereitgestellte Online-Modelltrainingssoftwarekomponente (OMTSC) entweder in einem Nicht-Echtzeitkontext oder in einem Echtzeitkontext ausgeführt wird.

10. Verfahren nach Anspruch 8 oder 9, wobei die bereitgestellte Online-Modelltrainingssoftwarekomponente (OMTSC) die bereitgestellte Modellausführungssoftwarekomponente (MESC) auf der Grundlage eines von dem technischen System, das Teilgradienten verwendet, um die Parameter, θ, des bereitgestellten Satzes von Funktionen, f, optimieren, empfangenen Datenstroms iterativ aktualisiert.

11. Verfahren nach einem der vorhergehenden Ansprüche 8 bis 10, wobei die bereitgestellte Modellausführungssoftwarekomponente (MESC) von ihrem binären Maschinenausführungscode vorgeschriebene Berechnungen auf einen von dem technischen System empfangenen Eingabedatenstrom zur Berechnung geschätzter Zielwerte, ŷ**,** anwendet.

12. Verfahren nach Anspruch 11, wobei der Eingabedatenstrom einen von Sensoren (SEN) des technischen Systems empfangenen Sensordatenstrom (SD) umfasst.

13. Verfahren nach einem der vorhergehenden Ansprüche 1 bis 12, wobei der maschinenausführbare Code auf einer durch eine Steuereinrichtung gebildeten Ziel-Feldvorrichtung (TFD) bereitgestellt und ausgeführt wird.

14. Verfahren nach einem der vorhergehenden Ansprüche 1 bis 13, wobei der konvertierte maschinenausführbare Code in einem Speicher der Ziel-Feldvorrichtung (TFD) bereitgestellt und von einem Prozessor der Ziel-Feldvorrichtung (TFD) ausgeführt wird.

15. Verfahren nach einem der vorhergehenden Ansprüche 11 bis 14, wobei ein Fehler zwischen beobachteten Zielwerten, y, und geschätzten Zielwerten, ŷ**,** die durch die auf der Ziel-Feldvorrichtung (TFD) bereitgestellte Modellausführungssoftwarekomponente (MESC) berechnet werden, durch Vergleichen der beobachteten Zielwerte, y, und der geschätzten Zielwerte, ŷ**,** mithilfe einer vordefinierten Verlustfunktion, L, gemessen wird.

16. Bereitstellungssystem zur Bereitstellung eines adaptiven selbstlernenden Steuerprogramms auf einer Ziel-Feldvorrichtung (TFD), wobei das System Folgendes umfasst:
(a) eine Benutzerschnittstelle (2) zum Eingeben eines Satzes von Funktionen, f, der mindestens einen abstimmbaren Parameter, θ, aufweist, der ein Systemmodell (SysMod) bildet, das Merkmale eines technischen Systems darstellt,
(b) eine Verarbeitungseinheit (3), die dazu konfiguriert ist, das Systemmodell (SysMod) zu erweitern durch automatisches Ableiten von dem eingegebenen Satz von Funktionen, f, eines zusätzlichen Satzes von Funktionen, der verwendet wird, um die abstimmbaren Parameter, θ, des Systemmodells (SysMod) zu optimieren,
(c) eine Ausgabeschnittstelle (4), die verwendet wird, um den maschinenausführbaren Code in einem Speicher der Ziel-Feldvorrichtung (TFD) zur Ausführung durch einen Prozessor der Ziel-Feldvorrichtung (TFD) bereitzustellen,
wobei das Bereitstellungssystem dazu konfiguriert ist, die abstimmbaren Parameter, θ, des bereitgestellten Satzes von Funktionen, f, mit einer Lernrate, η, durch Gewichten von Teilgradienten der Parameter, θ, mit der Lernrate, η, und dann Addieren des Ergebnisses zu den jeweiligen Parametern, iterativ zu optimieren,
wobei das Lernen in Echtzeit erfolgt,
**dadurch gekennzeichnet,**
**dass** das Bereitstellungssystem ferner so konfiguriert ist, dass:
das Systemmodell (SysMod) dazu ausgebildet ist, Merkmale eines technischen Systems zu lernen,
auf der Grundlage des Systemmodells (SysMod) durch eine Grapherzeugungssoftwarekomponente (GGSC) automatisch ein Berechnungsgraph (CG) erzeugt wird, und
der erzeugte Berechnungsgraph (CG) auf ein
Modelltransformationsmodul (MTM) angewendet wird, um den für die Ziel-Feldvorrichtung (TFD) spezifischen binären Maschinenausführungscode zu erzeugen, der auf der Ziel-Feldvorrichtung (TFD) bereitzustellen und auszuführen ist.

## Revendications

1. Procédé de déploiement et d'exécution de fonctions d'auto-optimisation sur un dispositif de terrain cible (TFD),
le procédé comprenant les étapes suivantes :
la fourniture (S1) d'un ensemble de fonctions, f, possédant au moins un paramètre accordable, θ, et
l'optimisation itérative des paramètres accordables, θ, de l'ensemble de fonctions, f, fourni avec un taux d'apprentissage, η, par la pondération de gradients partiels des paramètres, θ, avec le taux d'apprentissage, η, et ensuite l'ajout du résultat aux paramètres respectifs,
l'apprentissage étant exécuté en temps réel,
**caractérisé**
**en ce que** l'ensemble de fonctions, f, fourni forme un modèle de système (SysMod) adapté à l'apprentissage de caractéristiques d'un système technique,
**en ce que** le modèle de système (SysMod) est étendu par la dérivation automatique, à partir de l'ensemble de fonctions, f, d'un ensemble de fonctions additionnel utilisé de façon à optimiser les paramètres accordables, θ, du modèle de système (SysMod),
**en ce que**, sur la base du modèle de système (SysMod) formé par l'ensemble de fonctions, f, fourni un graphe de calcul (CG) est généré automatiquement par un composant logiciel de génération de graphes (GGSC), et
**en ce que** le graphe de calcul (CG) généré est appliqué à un module de transformation de modèle (MTM) de façon à générer un code d'exécution par machine binaire spécifique au dispositif de terrain cible (TFD), le code exécutable par machine étant déployé et exécuté sur ledit dispositif de terrain cible (TFD).

2. Procédé selon la revendication 1 dans lequel le modèle de système (SysMod) comprend un modèle d'apprentissage par machine, ML, qui comprend un réseau neuronal, plus particulièrement un réseau neuronal d'apprentissage profond, ou qui comprend un arbre de décision, un modèle de régression logistique ou un système d'équations.

3. Procédé selon l'une quelconque des revendications précédentes 1 à 2 dans lequel l'ensemble de fonctions additionnel comprend des gradients partiels par rapport aux paramètres accordables, θ, de l'ensemble de fonctions, f, d'origine fourni dérivés automatiquement dudit ensemble de fonctions, f, d'origine.

4. Procédé selon la revendication 3 dans lequel l'ensemble de fonctions additionnel représente des descentes de gradient stochastiques, des descentes de gradient de mini-lot et/ou des descentes de gradient complètes.

5. Procédé selon l'une quelconque des revendications précédentes dans lequel le graphe de calcul (CG) généré comprend
un sous-graphe de calcul vers l'avant (FCG) représentant l'ensemble de fonctions, f, d'origine, et
un sous-graphe de calcul vers l'arrière (BCG) représentant l'ensemble de fonctions additionnel dérivé utilisé de façon à entraîner les paramètres accordables, θ, de l'ensemble de fonctions, f, d'origine.

6. Procédé selon l'une quelconque des revendications précédentes dans lequel le graphe de calcul (CG) généré est exporté vers le module de transformation de modèle (MTM).

7. Procédé selon la revendication 6 dans lequel le graphe de calcul (CG) généré reçu par le module de transformation de modèle (MTM) est analysé de façon à fournir un code intermédiaire dans un langage de programmation de bas niveau qui est compilé de façon à générer le code exécutable par machine binaire (BMEC) spécifique audit dispositif de terrain cible (TFD) qui est déployé sur ledit dispositif de terrain cible (TFD).

8. Procédé selon l'une quelconque des revendications précédentes 5 à 7 dans lequel le sous-graphe de calcul vers l'avant (FCG) qui forme une partie du graphe de calcul (CG) généré est analysé de façon à fournir un premier code intermédiaire compilé de façon à générer un premier composant logiciel exécutable par machine binaire formant un composant logiciel d'exécution de modèle (MESC) déployé sur ledit dispositif de terrain cible (TFD) et
dans lequel le sous-graphe de calcul vers l'arrière (BCG) qui forme une partie du graphe de calcul (CG) généré est analysé de façon à fournir un deuxième code intermédiaire compilé de façon à générer un deuxième composant logiciel exécutable par machine binaire formant un composant logiciel d'entraînement de modèle en ligne (OMTSC) déployé sur ledit dispositif de terrain cible (TFD) .

9. Procédé selon la revendication 8 dans lequel le composant logiciel d'exécution de modèle (MESC) déployé sur ledit dispositif de terrain cible (TFD) est exécuté dans un contexte temps réel et dans lequel le composant logiciel d'entraînement de modèle en ligne (OMTSC) déployé qui est déployé sur ledit dispositif de terrain cible (TFD) est exécuté soit dans un contexte non temps réel ou dans un contexte temps réel.

10. Procédé selon la revendication 8 ou 9 dans lequel le composant logiciel d'entraînement de modèle en ligne (OMTSC) déployé actualise itérativement le composant logiciel d'exécution de modèle (MESC) déployé sur la base d'un flux de données reçu à partir du système technique au moyen de gradients partiels de façon à optimiser les paramètres, θ, de l'ensemble de fonctions, f, fourni.

11. Procédé selon l'une quelconque des revendications précédentes 8 à 10 dans lequel le composant logiciel d'exécution de modèle (MESC) déployé applique des calculs prescrits par son code exécutable par machine binaire à un flux de données en entrée reçu à partir du système technique pour le calcul de valeurs cibles estimées, ŷ.

12. Procédé selon la revendication 11 dans lequel le flux de données en entrée comprend un flux de données de capteur (SD) reçu à partir de capteurs (SEN) du système technique.

13. Procédé selon l'une quelconque des revendications précédentes 1 à 12 dans lequel le code exécutable par machine est déployé et exécuté sur un dispositif de terrain cible (TFD) formé par un dispositif de commande.

14. Procédé selon l'une quelconque des revendications précédentes 1 à 13 dans lequel le code exécutable par machine converti est déployé dans une mémoire du dispositif de terrain cible (TFD) et exécuté par un processeur du dispositif de terrain cible (TFD).

15. Procédé selon l'une quelconque des revendications précédentes 11 à 14 dans lequel une erreur entre des valeurs cibles observées, y, et des valeurs cibles estimées, ŷ**,** calculées par le composant logiciel d'exécution de modèle (MESC) déployé sur ledit dispositif de terrain cible (TFD) est mesurée par la comparaison des valeurs cibles observées, y, et des valeurs cibles estimées, ŷ**,** au moyen d'une fonction de perte prédéterminée, L.

16. Système de déploiement destiné au déploiement d'un programme de commande d'auto-apprentissage adaptatif sur un dispositif de terrain cible (TFD),
ledit système comprenant :
(a) une interface utilisateur (2) destinée à l'entrée d'un ensemble de fonctions, f, possédant au moins un paramètre accordable, θ, formant un modèle de système (SysMod) représentant des caractéristiques d'un système technique,
(b) une unité de traitement (3) configurée de façon à étendre le modèle de système (SysMod) par la dérivation automatique, à partir de l'ensemble de fonctions, f, entré, d'un ensemble de fonctions additionnel utilisé de façon à optimiser les paramètres accordables, θ, du modèle de système (SysMod),
(c) une interface de sortie (4) utilisée de façon à déployer le code exécutable par machine dans une mémoire dudit dispositif de terrain cible (TFD) pour exécution par un processeur du dispositif de terrain cible (TFD), et
le système de déploiement est configuré de façon à optimiser itérativement les paramètres accordables, θ, de l'ensemble de fonctions, f, fourni avec un taux d'apprentissage, η, par la pondération de gradients partiels des paramètres, θ, avec le taux d'apprentissage, η, et ensuite l'ajout du résultat aux paramètres respectifs,
l'apprentissage étant exécuté en temps réel,
**caractérisé en ce que** le système de déploiement est configuré en outre de sorte que :
le modèle de système (SysMod) soit adapté à l'apprentissage de caractéristiques du système technique, sur la base du modèle de système (SysMod), un graphe de calcul (CG) soit généré automatiquement par un composant logiciel de génération de graphes (GGSC), et
le graphe de calcul (CG) généré soit appliqué à un module de transformation de modèle (MTM) de façon à générer le code d'exécution par machine binaire spécifique au dispositif de terrain cible (TFD) à déployer et exécuter sur ledit dispositif de terrain cible (TFD).
